# EUROPEAN PATENT APPLICATION

(11) **EP 0 808 739 A2**
(43) Date of publication of application: **26.11.1997**
(21) Application number: 97108179.9
(22) Date of filing: 20.05.1997
(51) Int. Cl.: B60N 2/02

(54) **Method and apparatus for driving a dual-speed electric power seat assembly**

(30) Priority: 20.05.1996 US 650629
(71) Applicant: ITT AUTOMOTIVE ELECTRICAL SYSTEMS, INC., Auburn Hills, MI 48326-2356 (US)
(72) Inventor: Everhart, Jon C. Jr., Beavercreek, Ohio 45434 (US); Suriano. John R., Kettering, Ohio 45409 (US)
(74) Representative: Portwich, Peter

(57) **Abstract**

A method and apparatus for driving a power seat track mechanism which has a power seat secured thereto. The method includes the steps of providing a three- or four-brush motor having an output shaft coupled to the track mechanism, providing a battery having a first voltage polarity and a second voltage polarity, coupling the first voltage polarity to a first brush of the motor and coupling the second voltage polarity to a second brush of the motor so as to drive the output shaft in a first direction at a first speed, and coupling the first voltage polarity to the first brush and coupling the second voltage polarity to a third brush of the motor so as to drive the output shaft in the first direction at a second speed.

## Description

### Background of the Invention

The present invention relates generally to a method and apparatus for driving an electric power seat assembly for a vehicle, and more particularly to an electric power seat assembly having a bi-directional two-pole permanent magnet brush-type DC motor which facilitates driving a seat at a first speed during normal operation and driving the seat at a second speed during an "easy entry" operation.

In a vehicle with manually operated seats, it is possible for a driver or front seat passenger to enter or exit the vehicle with greater leg clearance by quickly moving the front seat rearwardly using known mechanical lever controls. Likewise, it is possible for a rear seat passenger to enter or exit a two-door vehicle with greater leg clearance by quickly moving the front seat forwardly using known mechanical lever controls.

Likewise, it is also known to provide an electric power seat assembly with an "easy-entry" position, wherein a power seat is driven, upon activation of a button or switch, to a predetermined position which permits easy ingress and egress to and from, or around the power seat. However, with previous power seat systems, the power seat is typically driven to and from the predetermined position at the same speed as during normal operation (e.g. when an occupant repositions the seat while seated thereon), thus causing a user to wait for a longer period of time to achieve the same leg clearance as with a manually-operated seat assembly.

U.S. Patent Application Serial No. 08/514,180 (180 application), filed on August 11, 1995, is commonly assigned to the same assignee of the present invention, and is incorporated herein by reference for all that is discloses. The 180 application discloses a vehicle power seat adjuster having a drive motor which provides two-speed operation for use in quickly repositioning a power seat to and from an "easy entry" position.

In particular, the 180 application proposes that two-speed power seat operation may be obtained by providing a drive motor with two separate windings, such as a first or low-speed winding and a second or high-speed winding, which windings are controlled by one or two commutators. Alternatively, the 180 application proposes that a single-winding drive motor may be supplied with two different voltages to obtain two different output shaft rotation speeds.

What is described hereafter is an alternative method and apparatus for providing two-speed power seat operation wherein a power seat may be driven at a first speed during normal operation and driven at a second speed during an "easy entry" operation.

### Summary of the Invention

In accordance with one embodiment of the present invention, there is provided a power seat assembly including a seat secured to a track, and a motor having at least three brushes, wherein the motor is mechanically linked to the track.

Pursuant to another embodiment of the present invention, there is provided a method for driving a track which has a seat secured thereto. The method includes the steps of providing a motor having an output shaft coupled to the track, providing a battery having a first voltage polarity and a second voltage polarity, coupling the first voltage polarity to a first brush of the motor and coupling the second voltage polarity to a second brush of the motor so as to drive the output shaft in a first direction at a first speed, and coupling the first voltage polarity to the first brush and coupling the second voltage polarity to a third brush of the motor so as to drive the output shaft in the first direction at a second speed.

Pursuant to yet another embodiment of the present invention, there is provided a method for driving a track which has a seat secured thereto. The method includes the steps of providing a motor having an output shaft coupled to the track, providing a battery having a first voltage polarity and a second voltage polarity, coupling the first voltage polarity to a first brush of the motor and coupling the second voltage polarity to a second brush of the motor so as to drive the output shaft in a first direction at a first speed, and coupling the first voltage polarity to a third brush of the motor and coupling the second voltage polarity to the second brush so as to drive the output shaft in the first direction at a second speed.

It is therefore an object of the present invention to provide a new and useful power seat assembly for a vehicle.

It is another object of the present invention to provide an improved power seat assembly for a vehicle.

It is another object of the present invention to provide a new and useful method for driving a seat track mechanism which has a seat secured thereto.

It is a further object of the present invention to provide an improved method for driving a seat track mechanism which has a seat secured thereto.

It is yet another object of the present invention to provide a three- or four-brush DC motor for driving a seat track mechanism associated with a power seat assembly in two different directions at two different speeds.

It is yet another object of the present invention to provide a drive motor for a power seat assembly which is less expensive and easier to manufacture than the power seat drive motors associated with the prior art.

The above and other objects, features, and advantages of the present invention will become apparent from the following description and the attached drawings.

### Brief Description of the Drawings

FIG. 1 is a block diagram showing a first embodiment of power seat assembly which incorporates the features of the present invention therein;
FIG. 2 is a schematic diagram of a control circuit shown in FIG. 1;
FIG. 3 is a state table for a number of switching devices shown in FIG. 2;
FIGS. 4A-4D are schematic diagrams showing different configurations of the control circuit for different operating modes of the power seat assembly shown in FIG. 1;
FIG. 5 is a chart of output speed versus torque for the power seat assembly shown in FIG. 1;
FIG. 6 is a block diagram showing a second embodiment of power seat assembly which incorporates the features of the present invention therein;
FIG. 7 is a schematic diagram of a control circuit shown in FIG. 6;
FIG. 8 is a state table for a number of switching devices shown in FIG. 7;
FIGS. 9A-9D are schematic diagrams showing different configurations of the control circuit for different operating modes of the power seat assembly shown in FIG. 6;
FIG. 10 is a block diagram showing a third embodiment of power seat assembly which incorporates the features of the present invention therein;
FIG. 11 is a schematic diagram of a control circuit shown in FIG. 10;
FIG. 12 is a state table for a number of switching devices shown in FIG. 11; and
FIGS. 13A-13D are schematic diagrams showing different configurations of the control circuit for different operating modes of the power seat assembly shown in FIG. 10.

### Detailed Description of the Preferred Embodiment

While the invention is susceptible to various modifications and alternative forms, three specific embodiments thereof have been shown by way of example in the drawings and will herein be described in detail. It should be understood, however, that there is no intent to limit the invention to the particular forms disclosed, but on the contrary, the intention is to cover all modifications, equivalents, and alternatives falling within the spirit and scope of the invention as defined by the appended claims.

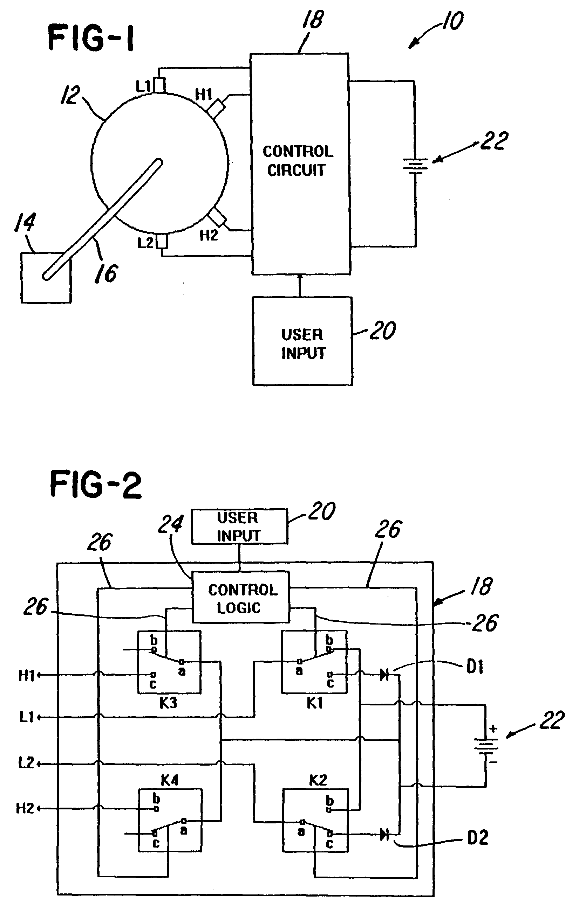

Referring now to FIG. 1, there is shown a first embodiment of power seat assembly 10 which incorporates the features of the present invention therein. As described in detail below, the power seat assembly 10 includes a motor 12, conventional power seat track mechanism 14 slidably secured to a vehicle power seat (not shown), conventional mechanical linkage 16 connecting an output shaft (not shown) of the motor 12 to the seat track mechanism 14, control circuit 18 for controlling the operation of the motor 12, user input device 20 such as a switch or button, and power source 22 such as a vehicle battery which supplies DC power to the motor 12 via the control circuit 18.

In a preferred embodiment, the motor 12 is a two-pole, permanent magnet, DC motor. The motor 12 includes a first pair of brushes L1, L2 and a second pair of brushes H1, H2 which are mounted in a brush holder (not shown) of the motor 12. The brushes L1, L2 permit the motor 12 to operate bi-directionally at a first or lower-speed. The brushes H1, H2 permit the motor 12 to operate bi-directionally at a second or higher-speed. It should be appreciated that the output shaft of the motor 12 rotates at the first or lower speed during normal power seat operations, and rotates at the second or higher speed during an "easy entry" operation. Each of the brushes L1, L2, H1, H2 contact a commutator (not shown) of the motor 12 in a conventional manner. In addition, each of the brushes L1, L2, H1, H2 are coupled to the control circuit 18.

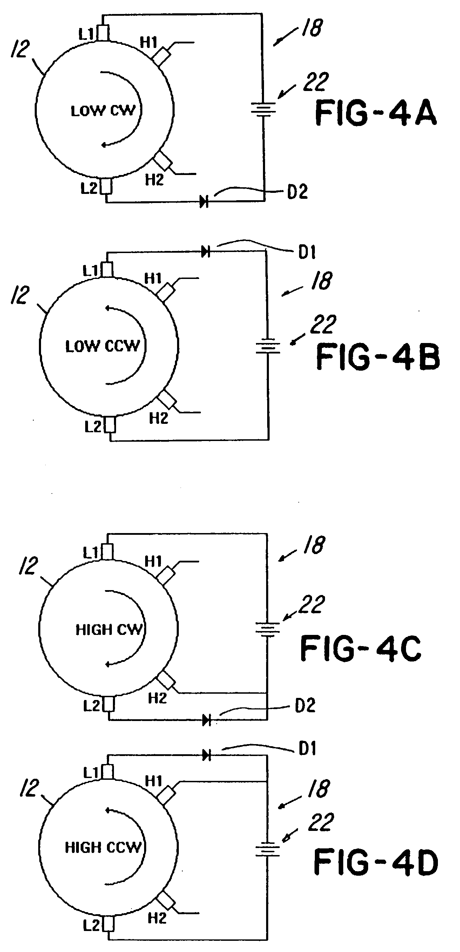

The brushes L1, L2 are conventionally spaced-apart approximately 180E. The brushes H1, H2 are positioned anti-rotationally relative to the respective low-speed brushes L1, L2 in order to improve performance characteristics of the motor 12 during high-speed operations. That is, the brush H1 is positioned in a clockwise direction relative to the brush L1 which is opposite to a counterclockwise rotation of the output shaft of the motor 12 as shown in FIG. 4D. The brush H1 may be angularly spaced-apart from the brush L1 by about 65E-75E. Likewise, the brush H2 is positioned in a counterclockwise direction relative to the brush L2 which is opposite to a clockwise rotation of the output shaft of the motor 12 as shown in FIG. 4C. The brush H2 may be angularly spaced-apart from the brush L2 by about 65E-75E.

It should be appreciated that as the angular separation between a low-speed brush (L) and a high-speed brush (H) approaches 90E, the greater the differential between the low operating speed and the high operating speed at a no-load operating condition, and the lower the stall torque characteristics of the motor 12. That is, the high operating speed of the motor 12 increases as the angular separation between a low-speed brush (L) and a high-speed brush (H) approaches 90E, for a particular low operating speed. In a preferred embodiment, the brush H1 is spaced-apart from the brush L1 by approximately 70E, and the brush H2 is spaced-apart from the brush L2 by approximately 70E.

Referring now to FIG. 2 there is shown a schematic diagram of the control circuit 18. The control circuit 18 includes a first switching device K1, second switching device K2, third switching device K3, fourth switching device K4, and control logic 24. Each of the switching devices K1, K2, K3, K4 may include a relay device such as a single pole, double throw (SPDT) relay having at least three terminals (a, b, c) as shown in FIG. 2. The user input device 20 is connected to the control logic 24 which processes commands issued by a user via the user input device 20. The control logic 24 includes a number of output lines 26 each of which is connected to an energizer coil (not shown) associated with one of the switching devices K1, K2, K3, K4.

A positive terminal (+) of the battery 22 is connected to terminal b of switching device K1 and to terminal (b) of switching device K2. A negative terminal (-) of the battery 22 is connected to terminal (c) of switching device K1 via a first diode D1, and to terminal (c) of switching device K2 via a second diode D2. The negative terminal (-) of the battery 22 is also connected to terminal (a) of the switching device K3, and to terminal (a) of switching device K4. Terminal (a) of switching device K1 is connected to brush L1, and terminal (a) of switching device K2 is connected to brush L2. Terminal (c) of the switching device K3 is connected to brush H1, and terminal (b) of switching device K4 is connected to brush H2.

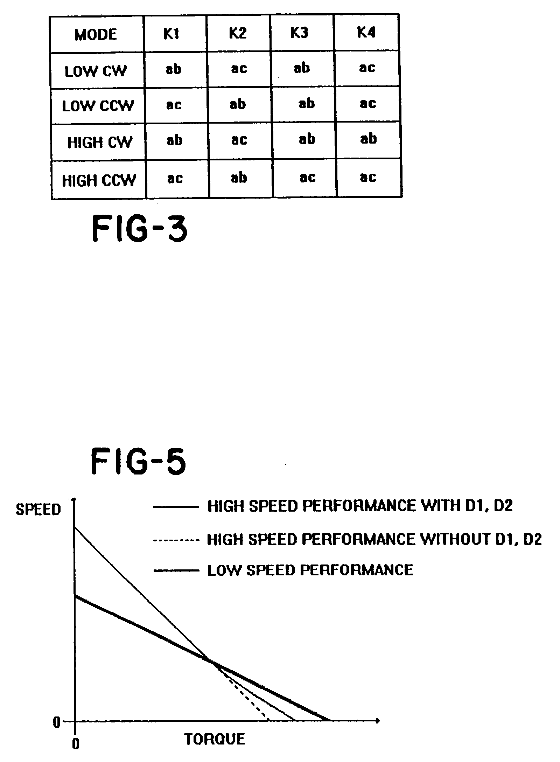

In operation, the control logic 24 configures the switching devices K1, K2, K3, K4 in accordance with the state table shown in FIG. 3 so as to cause the output shaft of the motor 12 to rotate either (1) at a first speed in a first direction, (2) at the first speed in a second direction, (3) at a second speed in the first direction, or (4) at the second speed in the second direction.

In particular, to drive the output shaft of the motor 12 at a low speed in a first (e.g. clockwise) direction, the first switching device K1 is configured so that terminals (a) and (b) thereof are electrically contacting, the second switching device K2 is configured so that terminals (a) and (c) thereof are electrically contacting, the third switching device K3 is configured so that terminals (a) and (b) thereof are electrically contacting, and the fourth switching device K4 is configured so that terminals (a) and (c) thereof are electrically contacting. The resulting control circuit 18 is shown in FIG. 4A.

To drive the output shaft of the motor 12 at a low speed in a second (e.g. counterclockwise) direction, the first switching device K1 is configured so that terminals (a) and (c) thereof are electrically contacting, the second switching device K2 is configured so that terminals (a) and (b) thereof are electrically contacting, the third switching device K3 is configured so that terminals (a) and (b) thereof are electrically contacting, and the fourth switching device K4 is configured so that terminals (a) and (c) thereof are electrically contacting. The resulting control circuit 18 is shown in FIG. 4B.

To drive the output shaft of the motor 12 at a high speed in the first (e.g. clockwise) direction, the first switching device K1 is configured so that terminals (a) and (b) thereof are electrically contacting, the second switching device K2 is configured so that terminals (a) and (c) thereof are electrically contacting, the third switching device K3 is configured so that terminals (a) and (b) thereof are electrically contacting, and the fourth switching device K4 is configured so that terminals (a) and (b) thereof are electrically contacting. The resulting control circuit 18 is shown in FIG. 4C.

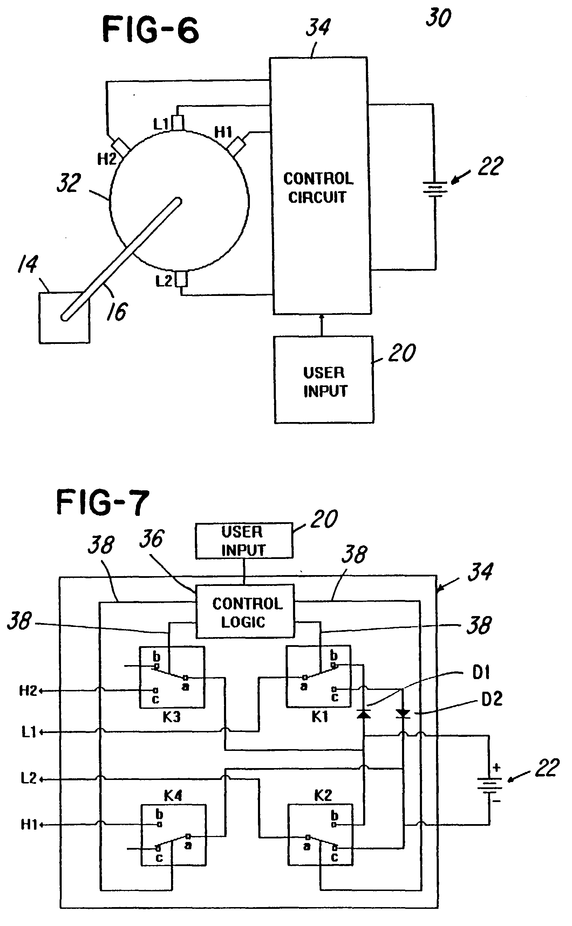

In FIG. 4C, when the motor 12 operates under no-load (low torque) conditions (e.g. the power seat is unoccupied), the diode D2 is reversed biased such that current flows through brush H2 but not through the brush L2. The result is that the output shaft of the motor 12 rotates at the desired higher speed. However, when the motor 12 operates under loaded conditions (e.g. the power seat is occupied), the diode D2 forward biases to permit current to flow through both of the brushes H2, L2. The result is that motor 12 exhibits higher torque performance under loaded conditions than if the diode D2 was not present, as described further below with regard to FIG. 5.

To drive the output shaft of the motor 12 at the high speed in the second (e.g. counterclockwise) direction, the first switching device K1 is configured so that terminals (a) and (c) thereof are electrically contacting, the second switching device K2 is configured so that terminals (a) and (b) thereof are electrically contacting, the third switching device K3 is configured so that terminals (a) and (c) thereof are electrically contacting, and the fourth switching device K4 is configured so that terminals (a) and (c) thereof are electrically contacting. The resulting control circuit 18 is shown in FIG. 4D.

In FIG. 4D, when the motor 12 operates under no-load (low torque) conditions (e.g. the power seat is unoccupied), the diode D1 is reversed biased such that current flows through brush H1 but not through the brush L1. The result is that the output shaft of the motor 12 rotates at the desired higher speed. However, when the motor 12 operates under loaded conditions (e.g. the power seat is occupied), the diode D1 forward biases to permit current to flow through both of the brushes H1, L1. The result is that motor 12 exhibits higher torque performance under loaded conditions than if the diode D1 was not present.

Referring now to FIG. 5, there is shown a speed versus torque (load) characteristic chart for the motor 12 when operating at the lower speed (FIGS. 4A and 4B), and at the higher speed (FIGS. 4C and 4D). The largest difference in operating speeds occurs when the motor 12 is operating under no-load (low torque) conditions. As the load (torque) on the motor 12 increases, the difference between the higher and lower operating speeds decreases until the curves cross each other. The curves cross because the stall torque for motor 12 when operating at the higher speed, is less than the stall torque for the motor 12 when operating at the lower speed. However, the diodes D1 (FIG. 4D) and D2 (FIG. 4C) permit the torque performance of motor 12, when operating at the higher speed, to approach or at least track the torque performance of the motor 12 when operating at the lower speed.

Referring now to FIG. 6, there is shown a second embodiment of a power seat assembly 30 which incorporates the features of the present invention therein. The same reference numerals are used in FIG. 6 to designate common elements discussed previously with regard to the power seat assembly 10 (FIG. 1), thus, further discussion thereof will not follow. The power seat assembly 30 includes a motor 32, conventional power seat track mechanism 14 slidably secured to a vehicle power seat (not shown), conventional mechanical linkage 16 connecting an output shaft (not shown) of the motor 32 to the seat track mechanism 14, control circuit 34 for controlling the operation of the motor 32, user input device 20 such as a switch or button, and power source 22 such as a vehicle battery which supplies DC power to the motor 32 via the control circuit 34.

The motor 32 includes a first pair of brushes L1, L2 and a second pair of brushes H1, H2 which are mounted in a brush holder (not shown) of the motor 32. The brushes L1, L2 permit the motor 32 to operate bi-directionally at a first or lower-speed, and the brushes H1, H2 permit the motor 32 to operate bi-directionally at a second or higher-speed. Each of the brushes L1, L2, H1, H2 contact a commutator (not shown) of the motor 32 in a conventional manner. In addition, each of the brushes L1, L2, H1, H2 are coupled to the control circuit 34.

As with the motor 12 (FIG. 1), the first pair of brushes L1, L2 of the motor 32 are conventionally spaced-apart approximately 180E, and the brush H1 of the motor 32 is angularly spaced-apart from the brush L1 in a clockwise direction. However, the motor 32 differs from the motor 12 (FIG. 1) in that the brush H2 is angularly spaced-apart from the brush L1 in a counterclockwise direction. The brushes H1, H2 may each be angularly spaced-apart from the brush L1 by about 65E-75E, and preferably by about 70E.

Referring now to FIG. 7 there is shown a schematic diagram of the control circuit 34. As with the control circuit 18 (FIG. 2), the control circuit 34 includes a first switching device K1, second switching device K2, third switching device K3, fourth switching device K4, and control logic 36. Each of the switching devices K1, K2, K3, K4 may include a relay device such as a single pole, double throw (SPDT) relay having at least three terminals (a, b, c) as shown in FIG. 7. The user input device 20 is connected to the control logic 36 which processes commands issued by a user via the user input device 20. The control logic 36 includes a number of output lines 38 each of which is connected to an energizer coil (not shown) associated with one of the switching devices K1, K2, K3, K4.

A positive terminal (+) of the battery 22 is connected to terminal b of switching device K1 via a first diode D1, and to terminal (b) of switching device K2. The positive terminal (+) of the battery 22 is also connected to terminal (a) of the switching device K3. A negative terminal (-) of the battery 22 is connected to terminal (c) of switching device K1 via a second diode D2, and to terminal (c) of switching device K2. The negative terminal (-) of the battery 22 is also connected to terminal (a) of the switching device K4. Terminal (a) of switching device K1 is connected to brush L1, and terminal (a) of switching device K2 is connected to brush L2. Terminal (c) of the switching device K3 is connected to brush H2, and terminal (b) of switching device K4 is connected to brush H1.

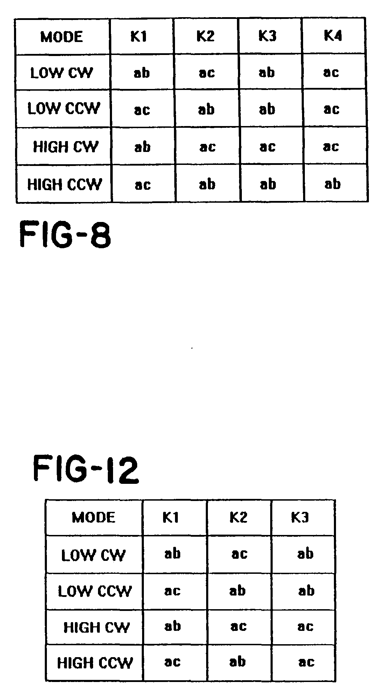

In operation, the control logic 36 configures the switching devices K1, K2, K3, K4 in accordance with the state table shown in FIG. 8 so as to cause an output shaft of the motor 32 to rotate either (1) at a first speed in a first direction, (2) at the first speed in a second direction, (3) at a second speed in the first direction, or (4) at the second speed in the second direction.

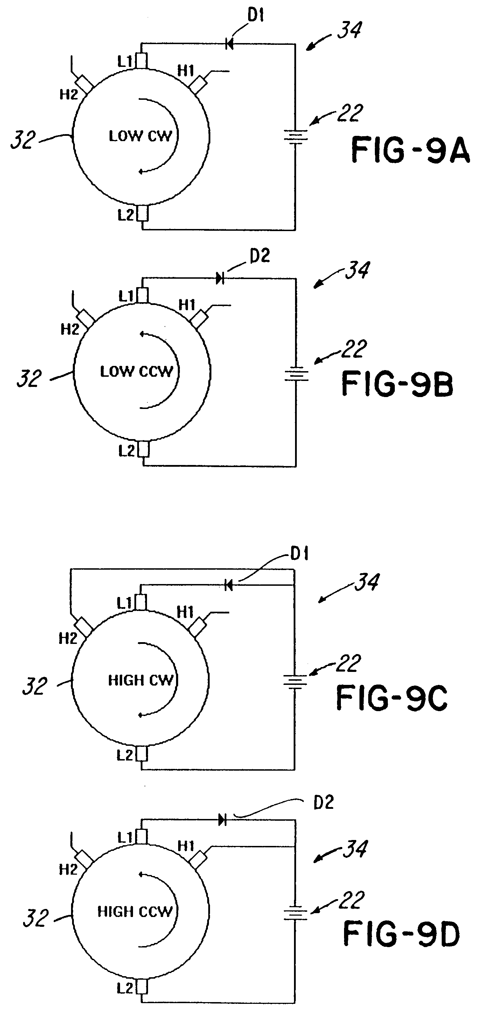

In particular, to drive the output shaft of the motor 32 at a low speed in a first (e.g. clockwise) direction, the first switching device K1 is configured so that terminals (a) and (b) thereof are electrically contacting, the second switching device K2 is configured so that terminals (a) and (c) thereof are electrically contacting, the third switching device K3 is configured so that terminals (a) and (b) thereof are electrically contacting, and the fourth switching device K4 is configured so that terminals (a) and (c) thereof are electrically contacting. The resulting control circuit 34 is shown in FIG. 9A.

To drive the output shaft of the motor 32 at a low speed in a second (e.g. counterclockwise) direction, the first switching device K1 is configured so that terminals (a) and (c) thereof are electrically contacting, the second switching device K2 is configured so that terminals (a) and (b) thereof are electrically contacting, the third switching device K3 is configured so that terminals (a) and (b) thereof are electrically contacting, and the fourth switching device K4 is configured so that terminals (a) and (c) thereof are electrically contacting. The resulting control circuit 34 is shown in FIG. 9B.

To drive the output shaft of the motor 32 at a high speed in the first (e.g. clockwise) direction, the first switching device K1 is configured so that terminals (a) and (b) thereof are electrically contacting, the second switching device K2 is configured so that terminals (a) and (c) thereof are electrically contacting, the third switching device K3 is configured so that terminals (a) and (c) thereof are electrically contacting, and the fourth switching device K4 is configured so that terminals (a) and (c) thereof are electrically contacting. The resulting control circuit 34 is shown in FIG. 9C.

In FIG. 9C, when the motor 32 operates under no-load (low torque) conditions (e.g. the power seat is unoccupied), the diode D1 is reversed biased such that current flows through brush H2 but not through the brush L1. The result is that the output shaft of the motor 32 rotates at the desired higher speed. However, when the motor 32 operates under loaded conditions (e.g. the power seat is occupied), the diode D1 forward biases to permit current to flow through both of the brushes H2, L1. The result is that motor 32 exhibits higher torque performance under loaded conditions than if the diode D1 was not present.

To drive the output shaft of the motor 32 at the high speed in the second (e.g. counterclockwise) direction, the first switching device K1 is configured so that terminals (a) and (c) thereof are electrically contacting, the second switching device K2 is configured so that terminals (a) and (b) thereof are electrically contacting, the third switching device K3 is configured so that terminals (a) and (b) thereof are electrically contacting, and the fourth switching device K4 is configured so that terminals (a) and (b) thereof are electrically contacting. The resulting control circuit 34 is shown in FIG. 9D.

In FIG. 9D, when the motor 32 operates under no-load (low torque) conditions (e.g. the power seat is unoccupied), the diode D2 is reversed biased such that current flows through brush H1 but not through the brush L1. The result is that the output shaft of the motor 32 rotates at the desired higher speed. However, when the motor 32 operates under loaded conditions (e.g. the power seat is occupied), the diode D2 forward biases to permit current to flow through both of the brushes H1, L1. The result is that motor 32 exhibits higher torque performance under loaded conditions than if the diode D2 was not present.

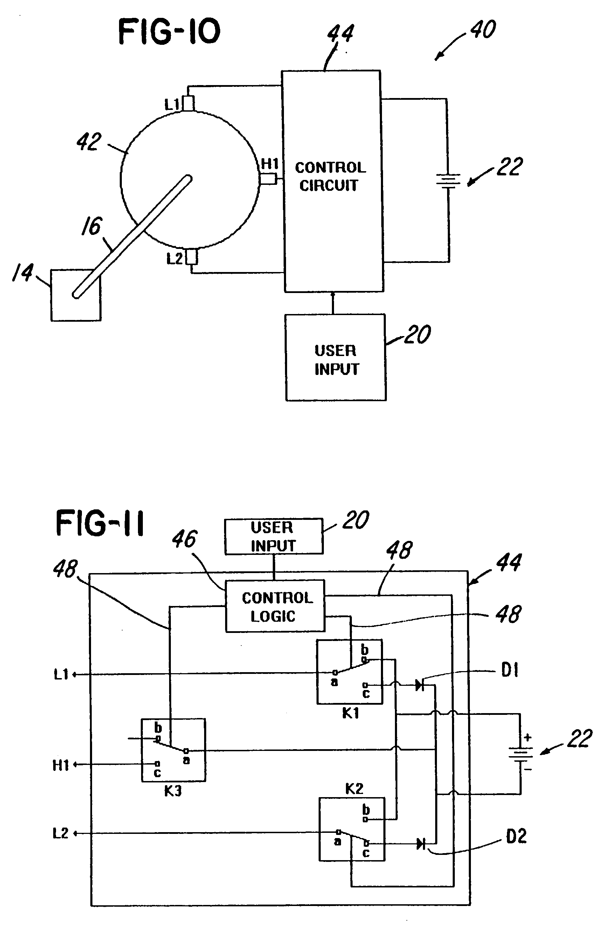

FIG. 10 is a block diagram showing a third embodiment of power seat assembly 40 which incorporates the features of the present invention therein. The same reference numerals are used in FIG. 10 to designate common elements discussed previously with regard to the power seat assembly 10 (FIG. 1), thus, further discussion thereof will not follow. The power seat assembly 40 includes a motor 42, conventional power seat track mechanism 14 slidably secured to a vehicle power seat (not shown), conventional mechanical linkage 16 connecting an output shaft (not shown) of the motor 42 to the seat track mechanism 14, control circuit 44 for controlling the operation of the motor 42, user input device 20 such as a switch or button, and power source 22 such as a vehicle battery which supplies DC power to the motor 42 via the control circuit 44.

The motor 42 may be a two-pole, permanent magnet, DC motor including a pair of low-speed brushes L1, L2 and a high speed brush H1 which are mounted in a brush holder (not shown) of the motor 42. The brushes L1, L2 permit the motor 42 to operate bi-directionally at a first or lower-speed, and the brush H1 permits the motor 42 to operate bi-directionally at a second or higher-speed. Each of the brushes L1, L2, H1 contact a commutator (not shown) of the motor 42 in a conventional manner. In addition, each of the brushes L1, L2, H1 are coupled to the control circuit 44.

As with the motor 12 (FIG. 1), the first pair of brushes L1, L2 of the motor 42 are conventionally spaced-apart approximately 180E. The brush H1 of the motor 42 is angularly spaced-apart from the brush L1 approximately 90E in a clockwise direction, and angularly spaced-apart from the brush L2 approximately 90E in a counterclockwise direction.

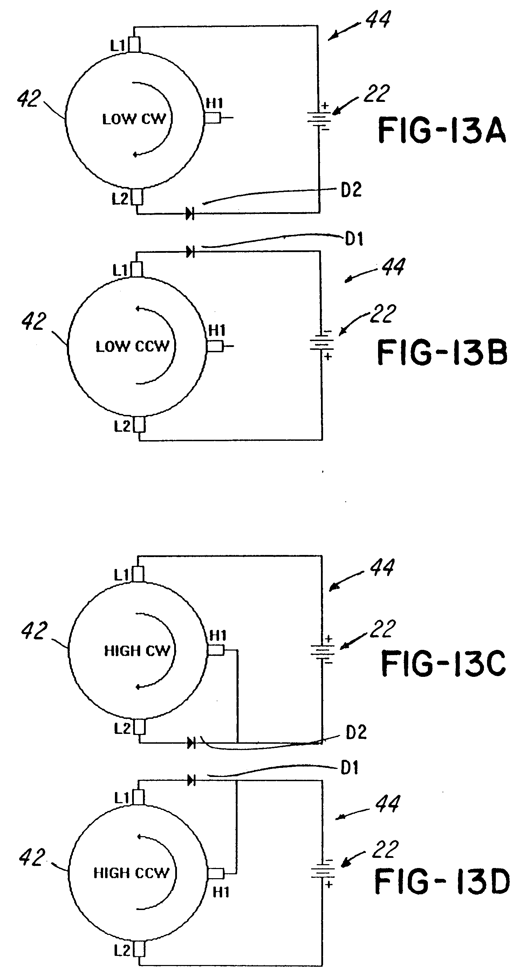

Referring now to FIG. 11 there is shown a schematic diagram of the control circuit 44. The control circuit 44 includes a first switching device K1, second switching device K2, third switching device K3, and control logic 46. Each of the switching devices K1, K2, K3, may include a relay device such as a single pole, double throw (SPDT) relay having at least three terminals (a, b, c) as shown in FIG. 11. The user input device 20 is connected to the control logic 46 which processes commands issued by a user via the user input device 20. The control logic 46 includes a number of output lines 48 each of which is connected to an energizer coil (not shown) associated with one of the switching devices K1, K2, K3.

A positive terminal (+) of the battery 22 is connected to terminal b of switching device K1, and to terminal (b) of switching device K2. A negative terminal (-) of the battery 22 is connected to terminal (c) of switching device K1 via a first diode D1, and to terminal (c) of switching device K2 via a second diode D2. The negative terminal (-) of the battery 22 is also connected to terminal (a) of the switching device K3. Terminal (a) of switching device K1 is connected to brush L1, terminal (a) of switching device K2 is connected to brush L2, and terminal (c) of the switching device K3 is connected to brush H1.

In operation, the control logic 46 configures the switching devices K1, K2, K3 in accordance with the state table shown in FIG. 12 so as to cause an output shaft of the motor 42 to rotate either (1) at a first speed in a first direction, (2) at the first speed in a second direction, (3) at a second speed in the first direction, or (4) at the second speed in the second direction.

In particular, to drive the output shaft of the motor 42 at a low speed in a first (e.g. clockwise) direction, the first switching device K1 is configured so that terminals (a) and (b) thereof are electrically contacting, the second switching device K2 is configured so that terminals (a) and (c) thereof are electrically contacting, and the third switching device K3 is configured so that terminals (a) and (b) thereof are electrically contacting. The resulting control circuit 44 is shown in FIG. 13A.

To drive the output shaft of the motor 42 at a low speed in a second (e.g. counterclockwise) direction, the first switching device K1 is configured so that terminals (a) and (c) thereof are electrically contacting, the second switching device K2 is configured so that terminals (a) and (b) thereof are electrically contacting, the third switching device K3 is configured so that terminals (a) and (b) thereof are electrically contacting. The resulting control circuit 44 is shown in FIG. 13B.

To drive the output shaft of the motor 42 at a high speed in the first (e.g. clockwise) direction, the first switching device K1 is configured so that terminals (a) and (b) thereof are electrically contacting, the second switching device K2 is configured so that terminals (a) and (c) thereof are electrically contacting, the third switching device K3 is configured so that terminals (a) and (c) thereof are electrically contacting. The resulting control circuit 44 is shown in FIG. 13C.

In FIG. 13C, when the motor 42 operates under no-load (low torque) conditions (e.g. the power seat is unoccupied), the diode D2 is reversed biased such that current flows through brush H1 but not through the brush L2. The result is that the output shaft of the motor 42 rotates at the desired higher speed. However, when the motor 42 operates under loaded conditions (e.g. the power seat is occupied), the diode D2 forward biases to permit current to flow through both of the brushes H1, L2. The result is that motor 42 exhibits higher torque performance under loaded conditions than if the diode D2 was not present.

To drive the output shaft of the motor 42 at the high speed in the second (e.g. counterclockwise) direction, the first switching device K1 is configured so that terminals (a) and (c) thereof are electrically contacting, the second switching device K2 is configured so that terminals (a) and (b) thereof are electrically contacting, the third switching device K3 is configured so that terminals (a) and (c) thereof are electrically contacting. The resulting control circuit 44 is shown in FIG. 13D.

In FIG. 13D, when the motor 42 operates under no-load (low torque) conditions (e.g. the power seat is unoccupied), the diode D1 is reversed biased such that current flows through brush H1 but not through the brush L1. The result is that the output shaft of the motor 42 rotates at the desired higher speed. However, when the motor 42 operates under loaded conditions (e.g. the power seat is occupied), the diode D1 forward biases to permit current to flow through both of the brushes H1, L1. The result is that motor 42 exhibits higher torque performance under loaded conditions than if the diode D1 was not present.

What has been described above is a power seat assembly having a three or four brush drive motor which drives a conventional power seat track mechanism in two different directions and at two different speeds. It should be appreciated that a three- or four-brush drive motor is less expensive and easier to manufacture than a drive motor having dual-windings with one or two commutators, as suggested in other solutions.

That is, the distinction between a two-brush drive motor and a three- or four-brush drive motor is simply the brush holder. Thus, a three- or four-brush drive motor can be manufactured from two-brush drive motor components by simply replacing the two-brush holder with a three- or four-brush holder. This is not the case with a drive motor having dual-windings and one or two commutators.

In addition, it is less expensive and/or more efficient to add additional brushes to a drive motor, than it is to vary the input voltage to a drive motor, in order to change the operating speed thereof, as suggested in other solutions. That is, the input voltage applied to a drive motor may be varied in order to change the operating speed thereof.

The input voltage may be varied with an expensive voltage controller device such as a transistorized chopping circuit which modulates the duty cycle of a line voltage in order to regulate the average voltage applied to the motor. Alternatively, the input voltage may be varied by placing one or more resistors in series with the drive motor. However, the resistors cause a loss of output torque at lower operating speeds, do not provide mgood speed separation at light or no-load conditions, and the resistors are a source of power loss.

While the invention has been illustrated and described in detail in the drawings and foregoing description, such illustration and description is to be considered as exemplary and not restrictive in character, it being understood that only the preferred embodiment has been shown and described and that all changes and modifications that come within the spirit of the invention are desired to be protected.

## Claims

1. A power seat assembly, comprising:
a seat secured to a track; and
a motor having at least three brushes, the motor being mechanically linked to the track.

2. The power seat assembly of claim 1, including a controller for selectively coupling a voltage source to at least two of the brushes.

3. The power seat assembly of claim 2, wherein the controller includes:
a plurality of switching devices each having an output terminal thereof connected to one of the at least three brushes.

4. The power seat assembly of claim 3, wherein the controller further includes means for selectively coupling the voltage source to the at least three brushes under pre-determined loading conditions.

5. The power seat assembly of claim 4, wherein the means for selectively coupling includes a diode connected between an input terminal of a switching device and the voltage source.

6. The power seat assembly of claim 1, wherein the motor includes a first low-speed brush, a second low-speed brush and a high-speed brush which permit the motor to drive the track in a path of movement at a first speed and at a second speed.

7. The power seat assembly of claim 6, wherein the first low-speed brush is spaced approximately 180E from the second low-speed brush, and the high-speed brush is spaced approximately 90E from the first low-speed brush and from the second low-speed brush.

8. The power seat assembly of claim 1, wherein the motor includes a first low-speed brush, a second low-speed brush, a first high-speed brush and a second high-speed brush which permit the motor to drive the track in a path of movement at a first speed and at a second speed.

9. The power seat assembly of claim 8, wherein:
the first low-speed brush is spaced approximately 180E from the second low-speed brush,
the first high-speed brush is spaced approximately 65E-75E from the first low-speed brush, and
the second high-speed brush is spaced approximately 65E-75E from the second low-speed brush.

10. The power seat assembly of claim 9, wherein:
the first high-speed brush is spaced approximately 70E from the first low-speed brush, and
the second high-speed brush is spaced approximately 70E from the second low-speed brush.

11. The power seat assembly of claim 8, wherein:
the first low-speed brush is spaced approximately 180E from a second low-speed brush,
the first high-speed brush is spaced approximately 65E-75E from the first low-speed brush in a first direction, and
the second high-speed brush is spaced approximately 65E-75E from the first low-speed brush in a second direction.

12. The power seat assembly of claim 11, wherein:
the first high-speed brush is spaced approximately 70E from the first low-speed brush, and
the second high-speed brush is spaced approximately 70E from the first low-speed brush.

13. The power seat assembly of claim 1, wherein the motor drives the track along a path of movement.

14. A method for driving a track which has a seat secured thereto, comprising the steps of:
providing a motor having an output shaft coupled to the track;
providing a battery having a first voltage polarity and a second voltage polarity;
coupling the first voltage polarity to a first brush of the motor and coupling the second voltage polarity to a second brush of the motor so as to drive the output shaft in a first direction at a first speed; and
coupling the first voltage polarity to the first brush and coupling the second voltage polarity to a third brush of the motor so as to drive the output shaft in the first direction at a second speed.

15. The method of claim 14, further including the step of:
coupling the second voltage polarity to the first brush and coupling the first voltage polarity to the second brush so as to drive the output shaft in a second direction at the first speed.

16. The method of claim 15, further including the step of:
coupling the second voltage polarity to a fourth brush of the motor and coupling the first voltage polarity to the second brush so as to drive the output shaft in a second direction at the second speed.

17. The method of claim 15, further including the step of:
coupling the second voltage polarity to the third brush and coupling the first voltage polarity to the second brush so as to drive the output shaft in a second direction at the second speed.

18. A method for driving a track which has a seat secured thereto, comprising the steps of:
providing a motor having an output shaft coupled to the track;
providing a battery having a first voltage polarity and a second voltage polarity;
coupling the first voltage polarity to a first brush of the motor and coupling the second voltage polarity to a second brush of the motor so as to drive the output shaft in a first direction at a first speed; and
coupling the first voltage polarity to a third brush of the motor and coupling the second voltage polarity to the second brush so as to drive the output shaft in the first direction at a second speed.

19. The method of claim 18, further including the step of:
coupling the second voltage polarity to the first brush and coupling the first voltage polarity to the second brush so as to drive the output shaft in a second direction at the first speed.

20. The method of claim 19, further including the step of:
coupling the second voltage polarity to a fourth brush of the motor and coupling the first voltage polarity to the second brush so as to drive the output shaft in a second direction at the second speed.
